# EUROPÄISCHE PATENTSCHRIFT

(11) **EP 2 775 187 B1**
(45) Veröffentlichungstag und Bekanntmachung des Hinweises auf die Patenterteilung: **20.04.2016**
(21) Anmeldenummer: 14000662.8
(22) Anmeldetag: 25.02.2014
(51) Int. Cl.: F16L 33/22, E03C 1/04, F16L 33/207

(54) **VORRICHTUNG FÜR EINE SCHLAUCHARMATUR**
DEVICE FOR A HOSE FITTING
DISPOSITIF DE RACCORD POUR TUYAU SOUPLE

(30) Priorität: 07.03.2013 DE 102013003818
(43) Veröffentlichungstag der Anmeldung: 10.09.2014
(73) Patentinhaber: Grohe AG, 58675 Hemer (DE)
(72) Erfinder: Flessa, Thomas, 95131 Schwarzenbach (DE); Weiss, Martin, 58239 Schwerte (DE)

(56) Entgegenhaltungen:
- EP-A1- 2 322 831
- CH-A- 524 094
- DE-A1- 19 911 066
- DE-C1- 19 841 155
- FR-A- 1 249 979
- GB-A- 2 257 764

## Beschreibung

Die vorliegende Erfindung betrifft eine Vorrichtung für eine Schlaucharmatur, insbesondere Befestigungsmittel zur dauerhaften Fixierung eines Schlauchs an einem Anschlussstutzen eines Kartuschengehäuses und/oder eines Strahlbildners dieser Vorrichtung.

Gerade bei der Bereitstellung von Trinkwasser wird gefordert, dass das Trinkwasser ohne Metallkontakt durch die Armatur hindurchgeleitet wird. Bei Schlauchgarnituren erfolgt die Anbindung des Strahlbildners hin zum Kartuschenhalter über einen flexiblen Schlauch, so dass dort auch Verbindungsbereiche vorgesehen sind, die derzeit noch mit metallischen Verbindungsmitteln ausgeführt sind. Zur Realisierung einer dauerhaften Befestigung des Schlauchs und einem möglichst großen Bedienungs- und Montagekomfort ist gewünscht, dass die Befestigung möglichst klein ausgeführt ist, und dennoch die erforderlichen Anforderungen zur Aufnahme der Wasserdrücke, der Temperaturdifferenzen, der Widerstandsfähigkeit, der Korrosionsneigung, usw. erfüllt.

Bisher sind (metallische) Schraubverbindungen vorgeschlagen worden, wobei jeweils ein Gewindeteil am Kartuschenhalter bzw. am Strahlbildner und ein Gewindeteil am Schlauch ausgebildet ist und beide Bauteile miteinander verschraubt werden. Dies ist hinsichtlich der Montage relativ aufwendig und zeitraubend. Außerdem ist diese Befestigungsart relativ teuer.

Dokument DE 199 11 066 A1 offenbart eine Vorrichtung für eine Schlaucharmatur gemäß dem Oberbegriff von Anspruch 1.

Aufgabe der vorliegenden Erfindung ist es, die mit Bezug auf den Stand der Technik geschilderten Probleme zumindest teilweise zu lösen. Insbesondere soll eine Vorrichtung für eine Schlaucharmatur angegeben werden, die eine schnell montierbare, unlösbare Verbindung zwischen dem Schlauch und dessen Anschlussteilen der Vorrichtung realisiert.

Diese Aufgaben werden gelöst mit einer Vorrichtung gemäß den Merkmalen des Patentanspruchs 1. Vorteilhafte Weiterbildungen der Vorrichtung sind in den abhängigen Patentansprüchen angegeben.

Die Beschreibung, insbesondere mit Bezug auf die Figuren, veranschaulicht den beanspruchten Gegenstand weiter und gibt zusätzliche Ausführungsbeispiele der Erfindung an.

Die Vorrichtung für eine Schlaucharmatur umfasst zumindest ein Kartuschengehäuse mit einem ersten Anschlussstutzen oder einen Strahlbildner mit einem zweiten Anschlussstutzen. Weiter ist ein Schlauch vorgesehen, der zumindest mit dem ersten Anschlussstutzen oder dem zweiten Anschlussstutzen verbindbar ist. Weiter ist eine Klemmhülse vorgesehen, die einen Endbereich des Schlauchs außen zumindest auf dem ersten Anschlussstutzen oder dem zweiten Anschlussstutzen klemmt und mit einem nach innen gerichteten Kragen einen Vorsprung des ersten Anschlussstutzens oder des zweiten Anschlussstutzens umgreift.

Die vorstehende Formulierung soll insbesondere berücksichtigen, dass eine solche Klemmhülse bei einer ersten Verbindung des Schlauches hin zum Kartuschengehäuse und/oder bei einer zweiten Verbindung des Schlauches zum Stahlbildner vorgesehen sein kann. Soweit nachfolgend nicht näher präzisiert ist, ob der erste/zweite Anschlussstutzen gemeint ist, können diese Ausführungen sinngemäß für beide Anschlussstutzen gelten.

Das Kartuschengehäuse stellt dabei regelmäßig die Basis für diese Vorrichtung dar. Das Kartuschengehäuse kann mehrteilig ausgeführt sein. Es ist insbesondere aus Kunststoff hergestellt. Insbesondere bildet das Kartuschengehäuse einen ersten Anschlussstutzen aus, der den Wasserlauf hin zum Schlauch begrenzt bzw. abschließt. Dabei ist der erste Anschlussstutzen bevorzugt einteilig an dem Kartuschengehäuse ausgebildet.

Kumulativ oder alternativ ist ein Strahlbildner ausgebildet, der ebenfalls an einem Endbereich des Schlauchs befestigt werden kann. Ein Strahlbildner ist insbesondere ein Bauteil, das die gewünschte Gestalt des austretenden Wasserstrahls vorgibt. Auch der Strahlbildner weist einen zweiten Anschlussstutzen auf, für den im Wesentlichen die sinngemäßen Ausführungen zum ersten Anschlussstutzen gelten.

Bevorzugt ist, dass jeweils eine einzelne Klemmhülse pro Verbindung vorgesehen ist. Die Klemmhülse ist insbesondere so gestaltet, dass diese zumindest abschnittsweise koaxial zum Anschlussstutzen und/oder zum Schlauch positionierbar ist. Die Klemmhülse weist dabei insbesondere einen Innenradius auf, der (überwiegend) größer ausgeführt ist, als ein Außendurchmesser des Schlauchs. Damit ist insbesondere möglich, dass die Klemmhülse außen um den Schlauch angebracht bzw. über diesen hinweggestreift werden kann, insbesondere soweit der Schlauch ein verformbares und/oder elastisches Material im Mantel umfasst. Diese Klemmhülse ist insbesondere so ausgestaltet und zu montieren, dass diese einen Endbereich des Schlauchs von außen auf den Anschlussstutzen klemmt. So ist also der Schlauch insbesondere zwischen einer äußeren Klemmhülse und dem innen eingesteckten Anschlussstutzen fixiert.

Die Klemmhülse weist weiter einen nach innen gerichteten Kragen auf, der im montierten Zustand insbesondere benachbart zu dem Schlauch anzuordnen ist. Dieser nach innen gerichtete Kragen, der ggf. auch (in Umfangsrichtung) unterbrochen sein kann, umgreift nun einen ersten/zweiten Vorsprung des ersten/zweiten Anschlussstutzens. Der Vorsprung des Anschlussstutzens ist dabei so dimensioniert, dass dieser auch bei im Betrieb auftretenden Zugkräften nicht nachgibt. Der Vorsprung ist insbesondere einstückig mit dem Anschlussstutzen ausgeführt. Der Vorsprung kann zudem auch als Anschlag für den Schlauch dienen, wenn dieser auf den Anschlussstutzen aufgeschoben wird.

Besonders bevorzugt ist weiter, dass Kragen und der Vorsprung eine Rastverbindung bilden. Hierbei verhaken Kragen und Vorsprung miteinander insbesondere vollständig in Umfangsrichtung um den Anschlussstutzen herum. Insbesondere bildet der Vorsprung eine Art Hinterschnitt, den der Kragen beim Aufschieben auf den Anschlussstutzen überwinden muss. Hierfür kann die Klemmhülse ggf. (integrierte) Federabschnitte aufweisen, die bei der Montage ein Aufweiten des Kragens ermöglichen.

Weiterhin ist bevorzugt, dass die Klemmhülse und zumindest der erste Anschlussstutzen oder der zweite Anschlussstutzen eine unlösbare Verbindung bilden. Das heißt insbesondere, dass Kragen und Vorsprung so ausgestaltet sind, dass sich der Kragen beim Zurückziehen bzw. Entfernen der Klemmhülse von dem Anschlussstutzen nicht selbständig aufweitet. Damit ist insbesondere der Einsatz von Spezialwerkzeug und/oder sogar die Zerstörung der Klemmhülse erforderlich, wenn diese Verbindung gelöst werden soll. Hiermit soll eine Beschädigung / Funktionsbeeinträchtigung durch den Benutzer vermieden werden.

Erfindungsgemäß ist vorgesehen, dass die Klemmhülse innen mehrere Pressringe ausbildet, die den Schlauch gegen den ersten Anschlussstutzen oder den zweiten Anschlussstutzen drücken.

Die Klemmhülse soll insbesondere eine sichere Anlage des Schlauchs an dem Anschlussstutzen realisieren, wobei gerade auch die Wasserdichtheit eine wesentliche Rolle spielt. Um hier gezielt Drucklinien einzubringen, ist die Klemmhülse mit mehreren Pressringen versehen, die insbesondere eine Art hin zum Anschlussstutzen gerichtete Wölbung, Verdichtung oder dergleichen darstellen. Für eine einfache Konstruktion ist vorgesehen, dass die Pressringe einteilig mit der Klemmhülse hergestellt sind. Bevorzugt ist, dass ein einzelner Pressring in Umfangsrichtung konstant (gleichartig) ausgeführt ist, wobei jedoch auch möglich ist, dass mehrere Pressringe unterschiedlich zueinander ausgeführt sind, insbesondere hinsichtlich ihrer axialen und/oder radialen Erstreckung, ihrer Form, ihrer Oberfläche, usw.. Damit kann insbesondere auch eine Kapillarbildung unter Berücksichtigung der Fertigungstoleranzen der hier genannten Bauteile unterbunden werden.

Erfindungsgemäß ist vorgesehen, dass an der Klemmhülse mehrere Pressringe ausgebildet sind und der dem Kragen am weitesten entfernte Pressring axial benachbart zum ersten Anschlussstutzen oder zweiten Anschlussstutzen positioniert ist. Das heißt mit anderen Worten auch, dass dieser (letzte) Pressring im montierten Zustand bereits außerhalb des Bereichs des Anschlussstutzens positioniert ist und/oder den Schlauch nahe einer Mündung des Anschlussstutzens bzw. vor dem Anschlussstutzen zusammendrückt. Dabei tritt beispielsweise eine Verformung des Schlauchs ein, die bevorzugt den hydraulischen Durchmesser gegenüber dem Wasserlauf im Anschlussstutzen nicht wesentlich verringert. Ein Vorteil dieser Ausgestaltung ist, dass die Klemmhülse nun zwischen der Mündung des Anschlussstutzens und dem Vorsprung verspannt werden kann, so dass Montagefehler unterbunden werden können.

Gemäß einer weiteren Ausführungsvariante ist ein Wasserlauf durch einen Verbindungsbereich von zumindest dem ersten Anschlussstutzen oder dem zweiten Anschlussstutzen hin zum Schlauch nicht metallisch ausgeführt. Das heißt insbesondere, dass die Wasser führenden Oberflächen durch den Anschlussstutzen und/oder den Schlauch ohne Metall ausgeführt sind, also bspw. eine Wasserlaufoberfläche (nur) mit Kunststoff gebildet ist. Insbesondere wird so vermieden, dass Zwischenstücke zwischen Anschlussstutzen und Schlauch metallisch, insbesondere wie früher mit einem Gewinde, ausgeführt sind. Die Klemmhülse ist außen positioniert und daher nicht im Kontakt mit dem Wasser. Somit besteht hier die Möglichkeit, gleichwohl eine metallische Klemmhülse zu verwenden; dies ist aber nicht zwingend erforderlich.

Die Erfindung sowie das technische Umfeld werden nachfolgend anhand der Figuren näher erläutert. In den Figuren sind gleiche Bauteile mit den gleichen Bezugszeichen versehen. Es ist darauf hinzuweisen, dass die Figuren schematischer Natur sind und die Erfindung nicht darauf beschränkt ist. Es zeigen:
- Fig. 1: eine perspektivische Darstellung eines Ausführungsbeispiels einer Vorrichtung einer Schlaucharmatur, und
- Fig. 2: ein Detail einer erfindungsgemäßen Ausführungsvariante im Verbindungsbereich zwischen Schlauch und Kartuschengehäuse.

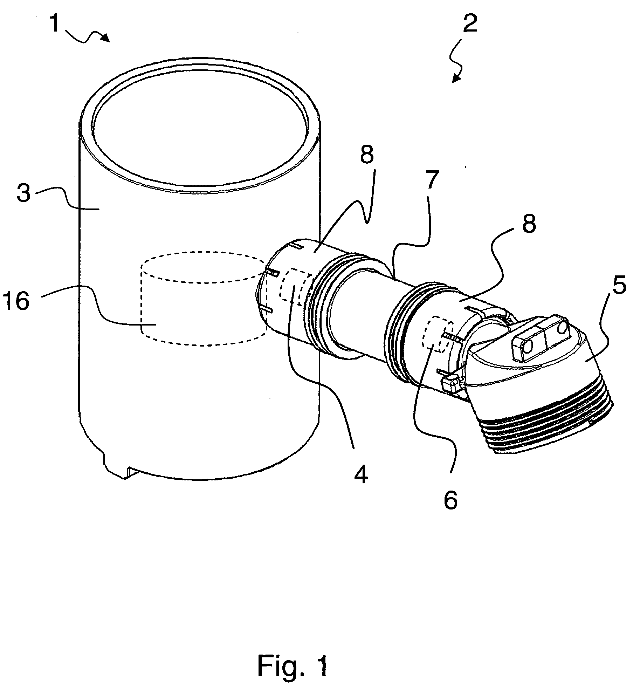

Fig. 1 zeigt schematisch und in einer teilperspektivischen Darstellung eine Vorrichtung 1 für eine Schlaucharmatur 2. Links in Fig. 1 ist das Kartuschengehäuse 3 dargestellt, in dem gestrichelt angedeutet die Kartusche 16 zur Wasseraufbereitung untergebracht ist. Das Wasser strömt aus diesem Kartuschengehäuse 3 über den angedeuteten ersten Anschlussstutzen 4 und den Schlauch 7 in den zweiten Anschlussstutzen 6 des sogenannten Strahlbildners 5. Dort strömt das Wasser mit einem gewünschten Strahlbild aus. Vorsorglich sei darauf hingewiesen, dass es auf das Strahlbild selbst hier nicht ankommt. Aus Fig. 1 kann weiter erkannt werden, dass der Schlauch 7 in beiden Endbereichen mit einer Klemmhülse 8 an den angrenzenden Bauteilen befestigt ist. Diese sind hier gegensinnig ausgerichtet, so dass jeweils ein erster Endabschnitt der Klemmhülse hin zum Schlauch und ein zweiter Endabschnitt der Klemmhülse hin zum benachbarten Bauteil ausgerichtet ist.

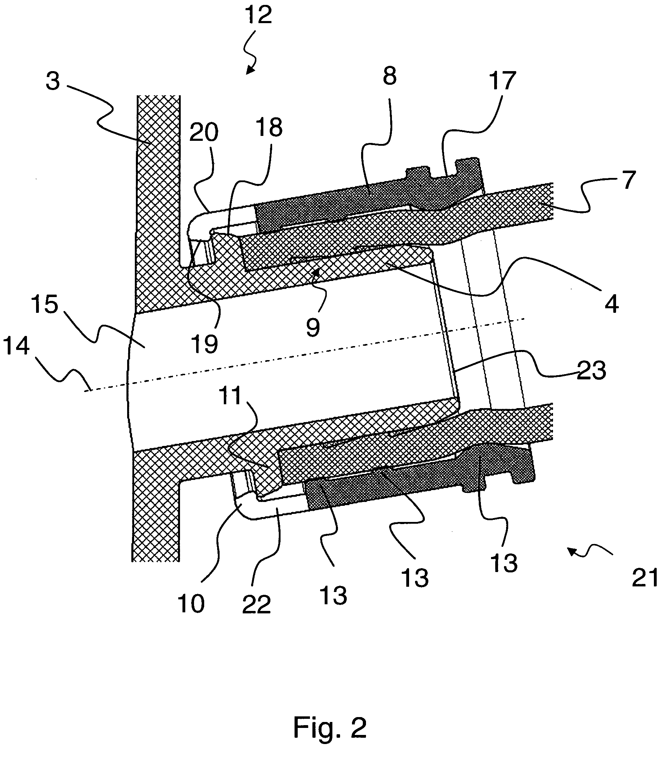

Fig. 2 zeigt eine bevorzugte Ausführungsvariante dieser Verbindung zwischen Schlauch 7 und Kartuschengehäuse 3. Die Verbindung kann und soll bevorzugt auch gleichermaßen mit dem Strahlbildner ausgeführt sein.

Dargestellt ist der erste Anschlussstutzen 4, der einen Wasserlauf 15 bildet, wobei Wasser entlang der Achse 14 aus dem ersten Anschlussstutzen 4 in den Schlauch 7 einströmen kann. Der erste Anschlussstutzen 4 ist bevorzugt aus Kunststoff gefertigt. Der erste Anschlussstutzen 4 weist eine Mündung 23 auf. Axial beabstandet zur Mündung 23 (also in Richtung zum Kartuschengehäuse 3 hin) ist ein umlaufender Vorsprung 11 ausgebildet. Der Vorsprung 11 erstreckt sich senkrecht zur Achse 14 (radial) umlaufend um den ersten Anschlussstutzen 4 herum. Der Vorsprung 11 steht insbesondere beidseits gegenüber der äußeren Mantelfläche des ersten Anschlussstutzens 4 über. Hierbei ist weiter vorgesehen, dass der Vorsprung 11 radial außen einen Konus 18 bildet, der somit die Erstreckung des Vorsprungs 11 senkrecht zur Achse 14 in Aufschubrichtung der Klemmhülse 8, also von der Mündung 23 hin zum Kartuschengehäuse 3, vergrößert.

Weiterhin ist zu erkennen, dass der Schlauch 7 mit einem Endbereich 9 über die Mündung 23 des ersten Anschlussstutzens 4 gestülpt ist, so dass dieser sich bis hin zum Vorsprung 11 erstreckt.

Koaxial außen um den ersten Anschlussstutzen 4 und den Endbereich 9 des Schlauchs 7 ist eine (einzelne) Klemmhülse 8 vorgesehen. Die Klemmhülse 8 weist einen (einzelnen) nach innen gerichteten Kragen 10 auf. In der hier gezeigten Ausführungsvariante ist der Kragen 10 unterbrochen, wie bspw. auch aus den in Fig. 1 erkennbaren Schlitzen 22 erkannt werden kann. Zwischen den Schlitzen 22 bilden Teilbereiche der Klemmhülse 8 (einstückig mit der Klemmhülse 8 geformte) Federabschnitte 20. Diese Konstruktion erlaubt, dass die Federabschnitte 20 bzw. der Kragen 10 aufgeweitet wird, sich also quer zur Achse 14 (radial) nach außen aufbiegen lassen, wenn diese über den Vorsprung 11 hinwegbewegt werden. Bevorzugt ist dabei, dass die Stirnseiten des Kragens 10 mit einer Gleitfläche 19 ausgebildet sind, die einerseits ein leichtes Aufbiegen beim Überstreifen über den Konus 18 unterstützt, andererseits aber auch eine Art Rastverbindung 12 realisiert, wenn der Kragen 10 hinter den Vorsprung 11 eingreift.

Eine besonders feste Verspannung der (vorzugsweise metallischen) Klemmhülse wird dadurch erreicht, dass an der Klemmhülse 8 mehrere nach innen gerichtete Pressringe 13 ausgebildet sind, wobei der am weitesten entfernte Pressring 13 axial benachbart zum bzw. neben dem ersten Anschlussstutzen 4 positioniert ist. Wie dies in Fig. 2 dargestellt ist, ist dieser letzte Pressring 13 tiefer nach innen und/oder breiter ausgeführt. Auch ist zu erkennen, dass hierbei eine gesteigerte Deformierung des Schlauchs 7 erfolgt, insbesondere in einem Bereich vor der Mündung 23 des ersten Anschlussstutzens 4. Auf diese Weise ist eine passgenaue Verspannung der Klemmhülse 8 zwischen Mündung 23 und Vorsprung 11 realisiert. Die weiteren Pressringe 13, die zwischen dem Kragen 10 und diesem letzten Pressring liegen, sind kleiner ausgeführt und dienen insbesondere dem sicheren Anpressdruck und/oder der Wasserdichtheit.

Schließlich ist hier auch noch dargestellt, dass auf der Außenumfangsfläche der Klemmhülse 8 zudem ein Werkzeugeingriff 17 bereitgestellt ist, der zu Montagezwecken eingesetzt werden kann.

Damit löst die Erfindung die eingangs gestellten Probleme und gibt insbesondere eine Vorrichtung für eine Schlaucharmatur an, wobei zwei Klemmhülsen eine nicht metallische, unlösbare Rastverbindung hin zum Kartuschengehäuse und zum Strahlbildner ausbilden.

### Bezugszeichenliste

- 1: Vorrichtung
- 2: Schlaucharmatur
- 3: Kartuschengehäuse
- 4: erster Anschlussstutzen
- 5: Strahlbildner
- 6: zweiter Anschlussstutzen
- 7: Schlauch
- 8: Klemmhülse
- 9: Endbereich
- 10: Kragen
- 11: Vorsprung
- 12: Rastverbindung
- 13: Pressring
- 14: Achse
- 15: Wasserlauf
- 16: Kartusche
- 17: Werkzeugeingriff
- 18: Konus
- 19: Gleitfläche
- 20: Federabschnitt
- 21: Verbindungsbereich
- 22: Schlitz
- 23: Mündung

## Patentansprüche

1. Vorrichtung (1) für eine Schlaucharmatur (2), umfassend zumindest ein Kartuschengehäuse (3) mit einem ersten Anschlussstutzen (4) oder einen Strahlbildner (5) mit einem zweiten Anschlussstutzen (6) sowie einen Schlauch (7), der zumindest mit dem ersten Anschlussstutzen (4) oder dem zweiten Anschlussstutzen (6) verbindbar ist, wobei weiter eine Klemmhülse (8) vorgesehen ist, die einen Endbereich (9) des Schlauchs (7) außen zumindest auf dem ersten Anschlussstutzen (4) oder dem zweiten Anschlussstutzen (6) klemmt, **dadurch gekennzeichnet, dass** die Klemmhülse (8) mit einem nach innen gerichteten Kragen (10) einen Vorsprung (11) des ersten Anschlussstutzens (4) oder des zweiten Anschlussstutzens (6) umgreift, wobei die Klemmhülse (8) innen mehrere Pressringe (13) ausbildet, die den Schlauch (7) gegen den ersten Anschlussstutzen (4) oder den zweiten Anschlussstutzen (6) drücken, und der dem Kragen (10) am weitesten entfernte Pressring (13) axial benachbart zum ersten Anschlussstutzen (4) oder zweiten Anschlussstutzen (6) positioniert ist.

2. Vorrichtung (1) nach Patentanspruch 1, bei der der Kragen (10) und der Vorsprung (11) eine Rastverbindung (12) bilden.

3. Vorrichtung (1) nach einem der vorhergehenden Patentansprüche, bei der die Klemmhülse (8) und zumindest der erste Anschlussstutzen (4) oder der zweite Anschlussstutzen (6) eine unlösbare Verbindung bilden.

4. Vorrichtung (1) nach einem der vorhergehenden Patentansprüche, bei der ein Wasserlauf (15) durch einen Verbindungsbereich (21) von zumindest dem ersten Anschlussstutzen (4) oder dem zweiten Anschlussstutzen (6) hin zum Schlauch (7) nicht metallisch ausgeführt ist.

## Claims

1. Device (1) for a hose fitting (2), comprising at least one cartridge housing (3) having a first connection piece (4) or a jet former (5) having a second connection piece (6) and also comprising a hose (7) which is connectible at least to the first connection piece (4) or the second connection piece (6), there further being provided a clamping sleeve (8) which clamps an end region (9) of the hose (7) on the outside at least on the first connection piece (4) or the second connection piece (6), **characterised in that** the clamping sleeve (8) engages with an inwardly directed collar (10) around a projection (11) of the first connection piece (4) or of the second connection piece (6), the clamping sleeve (8) forming on the inside a plurality of compression rings (13) which press the hose (7) against the first connection piece (4) or the second connection piece (6), and the compression ring (13) furthest from the collar (10) being positioned axially adjacent to the first connection piece (4) or second connection piece (6).

2. Device (1) according to patent claim 1, wherein the collar (10) and the projection (11) form a snap-on connection (12).

3. Device (1) according to either one of the preceding patent claims, wherein the clamping sleeve (8) and at least the first connection piece (4) or the second connection piece (6) form an inseparable connection.

4. Device (1) according to any one of the preceding patent claims, wherein a water conduit (15) through a connecting region (21) from at least the first connection piece (4) or the second connection piece (6) towards the hose (7) is of non-metallic construction.

## Revendications

1. Dispositif (1) destiné à un raccord pour tuyau souple (2) comprenant au moins un boîtier de cartouche (3) comportant au moins un premier raccord (4) ou un élément générateur de jet (5), un second raccord (6) ainsi qu'un tuyau (7) pouvant être relié au moins au premier raccord (4) ou au second raccord (6), dans lequel il est en outre prévu une douille de serrage (8) qui comprime une zone d'extrémité (9) du tuyau (7) par l'extérieur au moins sur le premier raccord (4) ou le second raccord (6), **caractérisé en ce que**
la douille de serrage (8) vient en prise par une collerette (10) dirigée vers l'intérieur autour d'une saillie (11) du premier raccord (4) ou du second raccord (6), la douille de serrage (8) formant vers l'intérieur plusieurs bagues de serrage (13) qui compriment le tuyau (7) contre le premier raccord (4) ou le second raccord (6), et la bague de serrage (13) la plus éloignée de la collerette (10) étant située axialement au voisinage du premier raccord (4) ou du second raccord (6).

2. Dispositif (1) conforme à la revendication 1 dans lequel la collerette (10) et la saillie (11) forment une liaison par encliquetage (12).

3. Dispositif (1) conforme à l'une des revendications précédentes dans lequel la douille de serrage (8) et au moins le premier raccord (4) ou le second raccord (6) forment une liaison inamovible.

4. Dispositif (1) conforme à l'une des revendications précédentes dans lequel le passage d'eau (15) au travers de la zone de liaison (21) d'au moins le premier raccord (4) ou le second raccord (6) et du tuyau (7) est réalisé en un matériau non métallique.
